# EUROPEAN PATENT SPECIFICATION

(11) **EP 2 923 776 B1**
(45) Date of publication and mention of the grant of the patent: **10.01.2018**
(21) Application number: 12888422.8
(22) Date of filing: 14.11.2012
(51) Int. Cl.: B07C 5/342, A44B 19/42, B65G 47/14

(54) **PARTS FEEDER AND METHOD FOR MANUFACTURING SLIDE FASTENER**
TEILEZUFÜHRER UND VERFAHREN ZUR HERSTELLUNG DES REISSVERSCHLUSSES
CHARGEUR DE PIÈCES ET PROCÉDÉ DE FABRICATION D'ÉLÉMENT DE FIXATION COULISSANT

(43) Date of publication of application: 30.09.2015
(73) Proprietor: YKK Corporation, Tokyo 101-8642 (JP)
(72) Inventor: MATSUDA, Yasuhiko, Kurobe-shi Toyama 938-8601 (JP); HIRUMA, Tomonori, Kurobe-shi Toyama 938-8601 (JP); OOMURA, Isao, Kurobe-shi Toyama 938-8601 (JP); NOZAKA, Kazuhiro, Kurobe-shi Toyama 938-8601 (JP)
(74) Representative: Quinterno, Giuseppe
(86) International application number: PCT/JP2012/079562
(87) International publication number: WO 2014/076786

(56) References cited:
- EP-A1- 0 385 343
- EP-A2- 1 521 514
- JP-A- H06 107 324
- JP-A- 2002 350 354
- JP-A- 2002 350 354
- JP-A- 2003 104 539
- JP-A- 2005 104 700

## Description

### Technical Field

The present invention relates to a parts feeder for feeding fastener elements to an element attaching machine and a method of manufacturing a slide fastener.

### Background Art

As conventional parts feeders, a parts feeder is known in which includes a guide surface for guiding, in a circumference direction thereof, a large amount of parts inputted on an upper side thereof, a part conveying path for spirally conveying the parts side by side along a predetermined direction from an upper side thereof toward a lower side, a part discharging path for discharging parts, which are excluded by part arranging and selecting means, to the outside, transferring means for returning the parts, which are discharged from the part discharging path to the outside, to the guide surface, and a part guide member for conveying normal parts, which are delivered from the part conveying path, to the next procedure (e.g., see Patent Document 1).

Recently, there is also a need for a slide fastener, in which fastener elements having different colors are attached to a fastener tape in a predetermined color pattern along a longitudinal direction thereof. However, the parts feeder described in the Patent Document 1 is impossible to convey fastener elements having different colors side by side in a predetermined color pattern, and therefore cannot be employed to manufacture the slide fastener as described above.

Thus, an apparatus is conventionally known in which one element transferring rod having a pocket for receiving one fastener element is reciprocatingly moved to extract a predetermined-colored fastener element from a plurality of vertical chutes, which respectively receive fastener elements having different colors by color, and then to convey the fastener element to an element attaching machine (e.g., see Patent Document 2). If this apparatus is used, fastener elements having different colors can be conveyed to the element attaching machine side by side in a predetermined color pattern.

Japanese Patent Publication JP 2005 104700 A (and corresponding EP-A-1 521 514) discloses a parts feeder having an element supply source for receiving fastener elements and a conveying path for conveying and arranging the fastener elements supplied from the element supply source in a predetermined direction, the parts feeder comprising means, provided in the conveying path, to identify the orientation of the fastener elements and discharging means provided at a downstream side of the orientation detections means in the conveying path to discharge fastener elements having an unwanted orientation.
Japanese Patent Publication JP H07 049002 A (and corresponding EP 0 385 343 A1) discloses a method and apparatus for manufacturing a slide fastener, wherein differently colored slide fastener elements are carried in selected orders.
Japanese Patent Publication JP 2002 350 354 A is directed to an inspection device for automatically checking and adjusting an order of conveying tissue cartons.

### Summary of Invention

### Problems to Be Solved by Invention

However, in the apparatus described in Patent Document 1, because the element transferring rod is slid and the fastener elements are dropped by gravity, a processing speed thereof is slow and a supply capacity thereof to the element attaching machine is low. Also, a mechanism for sliding the element transferring rod and a control device are required, thereby increasing manufacturing costs of the apparatus.

The present invention has been made keeping in mind the above problems, and an object thereof is to provide a parts feeder and a method of manufacturing a slide fastener, in which fastener elements having different colors can be rapidly conveyed to an element attaching machine side by side in a predetermined color pattern, and also manufacturing costs of the apparatus can be reduced.

### Means for Solving Problems

The object of the present invention is achieved by the parts feeder according to claim 1, and the method according to claim 11. Specific embodiments are the subject of the dependent claims - in particular :
(2) The parts feeder according to (1), further including a supply chute connected to a downstream end of the conveying path to supply the fastener elements to an element attaching machine.
(3) The parts feeder according to (1) or (2), wherein the color identification means is a color sensor, and wherein the color sensor performs color identification at a position passing through a middle of each of the fastener elements in a width direction thereof.
(4) The parts feeder according to (3), wherein each of the fastener elements includes an engaging head portion and a pair of leg portions extending from the engaging head portion and is arranged on the conveying path so that the engaging head portion is oriented to an upstream side thereof and the pair of leg portions are oriented to a downstream side thereof, and wherein the color sensor performs the color identification at a position passing through a space between the pair of leg portions from the engaging head portion.
(5) The parts feeder according to (4), wherein the discharging means is an air spraying device, and wherein a spraying port of the air spraying device is provided at a position where the spraying port comes in contact with the leg portions of the fastener elements.
(6) The parts feeder according to (5), wherein each of the fastener elements includes a first main surface, a second main surface and side surfaces connecting the first and second main surfaces with each other, wherein the conveying path includes, at least in the vicinity of the spraying port, a first conveying surface for guiding the first main surface or the second main surface of each of the fastener elements and a second conveying surface for guiding one of the side surfaces of each of the fastener elements, and wherein the spraying port is provided at a position on the first conveying surface, through which one leg portion of the pair of leg portions opposite to another leg portion adapted to come in contact with the second conveying surface passes.
(7) The parts feeder according to (5) or (6), wherein the air spraying device is configured to spray air from an upstream side of the conveying path toward a downstream side thereof.
(8) The parts feeder according to any one of (1) to (7), wherein a cover portion for covering an upper side of the conveying path is provided at a downstream side of the color identification means and the discharging means in the conveying path.
(9) The parts feeder according to any one of (5) to (8), further including a control unit configured to control at least air spraying of the air spraying device, wherein the control unit comprises a storage unit storing the predetermined color pattern and is configured to perform color identification on the basis of information of the predetermined color pattern of the storage unit and information of the color identification means and then to spray air from the spraying port of the air spraying device on the basis of results of the color identification and a conveying speed of the fastener elements. (10) The parts feeder according to (2), wherein the element attaching machine includes a fastener tape supply device and an element crimping device.

### Advantageous Effects of Invention

The parts feeder according to the present embodiment includes the color identification means provided in the conveying path to identify colors of the fastener elements and the discharging means provided at a downstream side of the color identification means in the conveying path to discharge fastener elements having colors different from a predetermined color pattern, on the basis of information of the color identification means. Accordingly, fastener elements having different colors can be rapidly arranged in the predetermined color pattern and then conveyed to the element attaching machine. Also, a mechanism for mechanically arranging fastener elements in the predetermined color pattern is not required, thereby reducing manufacturing costs of the parts feeder.

The method of manufacturing the slide fastener incudes the steps of supplying fastener elements from the element supply source to the parts feeder, conveying the fastener elements through the conveying path of the parts feeder, identifying colors of the fastener elements by the color identification means provided in the conveying path, discharging fastener elements having colors different from a predetermined color pattern, by the discharging means on the basis of information of the color identification means, conveying fastener elements, which pass the discharging means, through the conveying path, supplying the fastener elements to the element attaching machine by the supply chute connected to a downstream end of the conveying path, and attaching the fastener elements to the fastener tape in the element attaching machine. Accordingly, fastener elements having different colors can be rapidly arranged in the predetermined color pattern and then conveyed to the element attaching machine.er.

### Brief Description of Drawings

Fig. 1 is a perspective view explaining one embodiment of a parts feeder according to the present invention.
Fig. 2 is a side view of the parts feeder shown in Fig. 1.
Fig. 3 is a perspective view of the periphery of a color sensor shown in Fig. 1.
Fig. 4 is a top plan view of a conveying path shown in Fig. 3.
Fig. 5 is a sectional view of the conveying path shown in Fig. 4.
Fig. 6 is a sectional view taken along an A-A line of Fig. 3.
Fig. 7 is a top plan view showing a position where the color sensor performs identification.
Fig. 8 is a control view of one embodiments of the parts feeder according to the invention.
Fig. 9 is a schematic perspective view of an element crimping device shown in Fig. 1.
Fig. 10 is a front view explaining a first example of a slide fastener manufactured using the parts feeder according to the invention.
Fig. 11 is a front view explaining a second example of a slide fastener manufactured using the parts feeder according to the invention.
Fig. 12 is a front view explaining a third example of a slide fastener manufactured using the parts feeder according to the invention.

### Embodiments of Invention

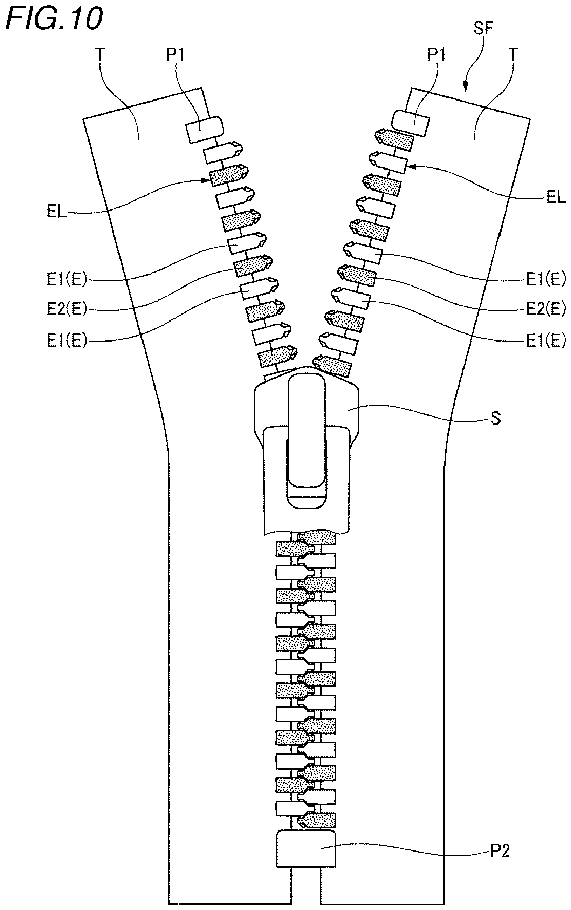

Hereinafter, one embodiment of a parts feeder and a method of manufacturing a slide fastener according to the present invention will be described in detail with reference to the accompanying drawings. Meanwhile, in the following description, as for a slide fastener, a front side refers to a near side with respect to the paper surface of Fig. 10, a back side refers to a far side with respect to the paper surface of Fig. 10, an upper side refers to an upper side with respect to the paper surface of Fig. 10, a lower side refers to a lower side with respect to the paper surface of Fig. 10, a left side refers to a left side with respect to the paper surface of Fig. 10, and a right side refers to a right side with respect to the paper surface of Fig. 10. Further, a right and left direction of the slide fastener is also referred to as a width direction. In addition, an upward and downward direction of the slide fastener is also referred to as a length direction.

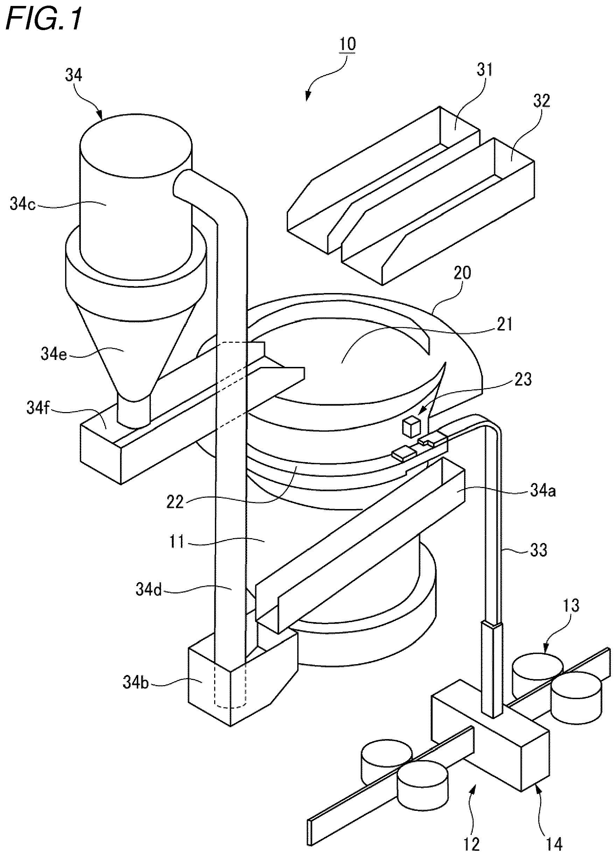

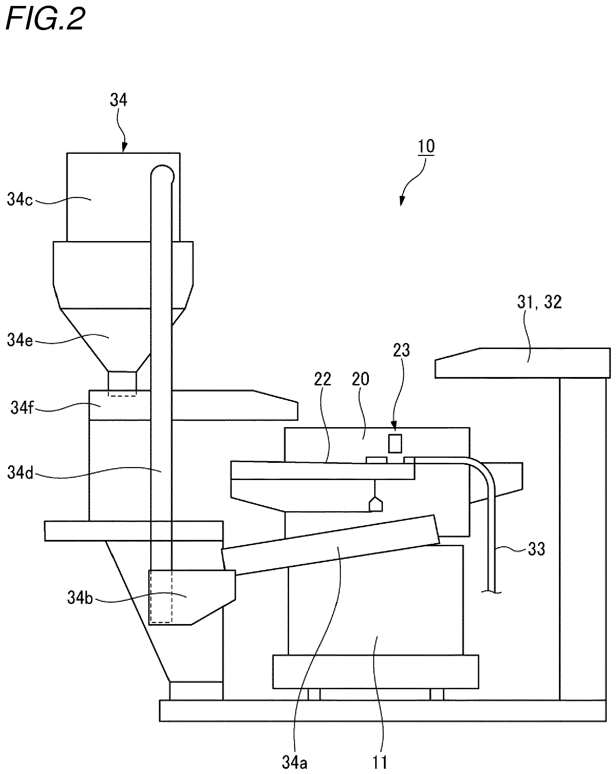

A parts feeder 10 of the present embodiment, as shown in Figs. 1 and 2, includes a base 11 supported on a floor surface, and a parts feeder main body 20 provided on the base 11 to be vibrated by a vibrator, not shown, and having a circular shape as viewed from the upper side thereof.

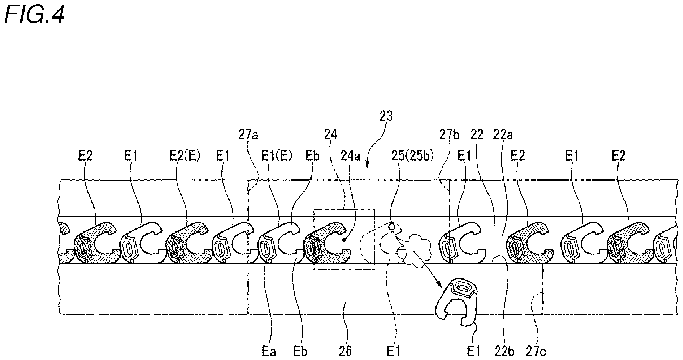

The parts feeder main body 20 includes a guide surface 21 for spreading, in a circumference direction thereof, a large amount of parts inputted on an upper side thereof, in particular, a circular disk-shaped guide surface 21 inclined from a center portion thereof downward in the circumferential direction, a spiral-shaped conveying path 22 for arranging and conveying the parts in a predetermined direction from an upper side toward a lower side of the parts feeder main body 20, and a part selection device 23 provided in a middle of the conveying path 21 to identify colors of the parts and then discharge parts having colors different from a predetermined color pattern. Also, an outer wall is formed on an outer circumferential portion of the guide surface 21 and an inlet to the conveying path 22 is formed by removing a portion of the outer wall. Meanwhile, the parts in the present embodiment are fastener elements E as shown in Fig. 4. Alternatively, the parts feeder main body 20 has not necessarily to be a bow-shaped circular parts feeder as described above and thus may be a straight parts feeder having a conveying path straightly arranged from a guide surface.

Also, the parts feeder 10 includes first and second element supply units (element supply sources) 31 and 32 each configured to supply fastener elements E to the guide surface 21 of the parts feeder main body 20, an supply chute 33 connected to a downstream end of the conveying path 22 of the parts feeder main body 20 to supply the fastener elements E to an element attaching machine 12, and a part return device 34 for returning the fastener elements E, which are discharged from the part selection device 23, to the guide surface 21.

Each of the first and second element supply unit 31 and 32 has a vibrator, not shown, and thus is configured to supply the fastener elements E to the guide surface 21 of the parts feeder main body 20 by vibrations thereof. Also, in the first and second element supply unit 31 and 32, as described below, fastener elements E having different colors are respectively received by color. Alternatively, means for supplying fastener elements E to the parts feeder main body 20 has not necessarily to be those employing vibrations and thus may be configured so that as a receiving portion in which fastener elements E are received is tilted by a driving source, not shown, the fastener elements E are slidingly dropped from the receiving portion to be supplied to the parts feeder main body 20.

The part return device 34 includes a discharging chute 34 for withdrawing fastener elements E discharged from the part selection device 23, an accumulation portion 34b for accumulating the fastener elements E delivered from the discharging chute 34a, a cyclone 34c and a suction pipe 34d for sucking the fastener elements E accumulated in the accumulating portion 34b, a hopper 34e for accumulating the sucked fastener elements E, and an element return portion 34f for supplying the fastener elements E, which are inputted from the hopper 34e, to the guide surface 21 of the parts feeder main body 20. Alternatively, the part return device 34 has not necessarily to have the above configuration, and for example, may be configured so that a belt conveyor is provided to extend form the discharging chute 34a to the guide surface 21 of the parts feeder main body 20 and the belt conveyor is used to return the fastener elements E to the guide surface 21 of the parts feeder main body 20.

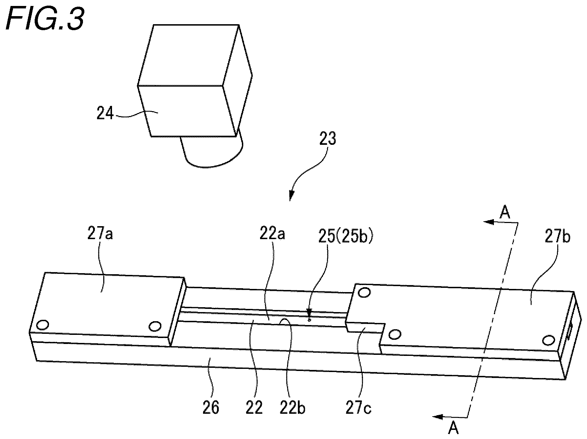

As shown in Figs. 3 to 5, the part selection device 23 includes a color sensor (color identification means) 24 provided in the vicinity of the downstream end of the conveying path 22 to identify colors of the fastener elements E and an air spraying device (discharging means) 25 provided at a downstream side of the color sensor 24 in the conveying path 22 to discharge fastener elements E having colors different from a predetermined color pattern on the basis of information of the color sensor 24. Meanwhile, in the conveying path 22, arranging means, not shown, for arranging fastener elements E in a predetermined direction is provided between the guide surface 21 and the part selection device 23.

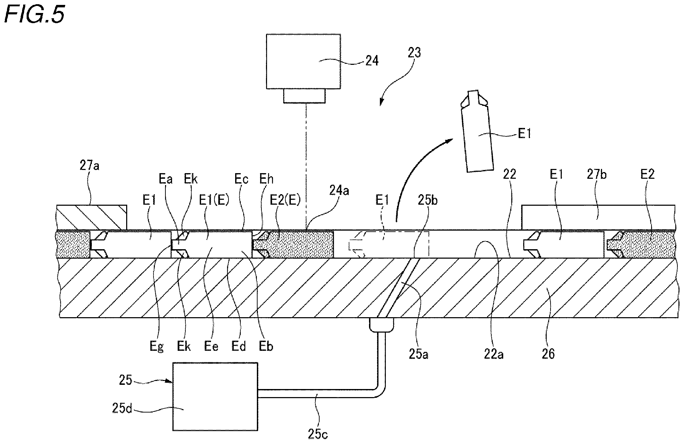

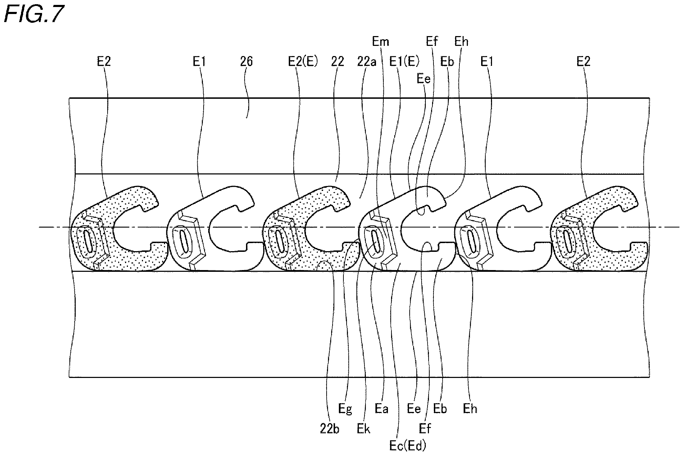

As shown in Figs. 4 and 7, each of fastener elements E, which are parts, has an engaging head portion Ea and a pair of leg portions Eb extending from the engaging head portion Ea, and in the present embodiment, is arranged on the conveying path 22 by the arranging means, not shown, so that the engaging head portion Ea is oriented to an upstream side thereof and the pair of leg portions Eb are oriented to a downstream side thereof. Alternatively, the fastener elements E may be arranged so that the engaging head portion Ea is oriented to the downstream side and the pair of leg portions Eb are oriented to the upstream side. Further, as shown in Figs. 5 and 7, each of the fastener elements E is a double-sided element which includes a first main surface Ec, a second main surface Ed, outside surfaces Ee of the engaging head portion Ea and the leg portions Eb, which correspond to a side surface connecting the first and second main surfaces Ec and Ed with each other, an inside surface Ef of the leg portion Eb, a front surface Eg of the engaging head portion Ea, rear surfaces Eh of the leg portions Eb, an engaging protrusion Ek of the engaging head portion Ea and an engaging recess Em of the engaging head portion Ea, and in which the engaging protrusion Ek and the engaging recess Eb are formed each of on the first main surface Ec and the second main surface Ed.

Also, according to the present embodiment, as the fastener elements E, first-colored (shown by a solid color) fastener elements E1 and second-colored (shown by a dot pattern), fastener elements E2 are employed, and the first-colored fastener elements E1 are received in the first element supply unit 31 and the second-colored fastener elements E2 are received in the second element supply unit 32.

Further, the parts feeder 10 of the present invention is configured to arrange the first-colored fastener elements E1 and the second-colored fastener elements E2 in the predetermined color pattern by the part selection device 23. The predetermined color pattern in the present embodiment is a color pattern in which the first-colored fastener elements E1 and the second-colored fastener elements E2 are alternately arranged. Alternatively, the predetermined color pattern is not limited to the color pattern of the embodiment, but may be any other patterns. Also, the number of colors for fastener elements may be any numbers.

As shown in Figs. 4 and 7, the color sensor 24 is configured so that an identification point 24a thereof is arranged at the middle of the fastener elements E in a width direction thereof, i.e., at a position where the engaging head portion Ea can be identified. Thus, the color sensor 24 performs color identification at a position passing through the middle of each of the fastener elements E in the width direction. In other words, the color sensor 24 performs color identification at a position passing through a space between the pair of leg portions Eb from the engaging head portion Ea of each of the fastener elements E. Therefore, because the space between the pair of leg portions Eb always exists between the engaging head portions Ea of the adjacent fastener elements E, a color of each fastener element E can be precisely identified. Meanwhile, the width direction of the fastener elements E is a direction between the pair of leg portions Eb of the fastener elements E.

As shown in Figs. 4 and 5, the air spraying device 25 includes a spraying hole 25a formed in a conveying path main body 26 having the conveying path 22 of a recessed groove shape, an air supply pipe 25c connected to a lower end of the spraying hole 25a, and an air compressor 24d for delivering a compressed air to a spraying port 25b through the air supply pipe 25c.

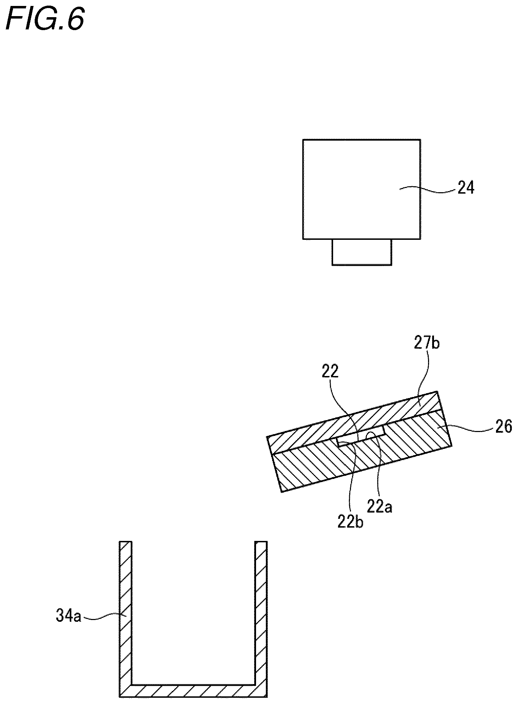

Also, the conveying path main body 26 having the conveying path 22, as shown in Fig. 6, is provided to be inclined downward toward the discharging chute 34a. Also, as shown in Figs. 6 and 7, the conveying path 22 has a first conveying surface 22a for guiding either of the first main surface Ec and the second main surface Ed of the fastener elements E, and a second conveying surface 22b for guiding one side surface Ee of the fastener elements E.

Further, as shown in Fig. 4, the spraying port 25b, which is an upper end opening of the spraying hole 25a of the air spraying device 25, is formed at a position on the first conveying surface 22a of the conveying path 22, through which a leg portion Eb of the pair of leg portions Eb of each of the fastener elements E opposite to a leg portion Eb adapted to come in contact with the second conveying surface 22b passes. In other words, the spraying port 25b is formed at a position where the spraying port 25b comes in contact with a leg portion Eb of the fastener elements E, which is located toward an upper side of the inclination of the first conveying surface 22a. Thus, air sprayed from the spraying port 25b comes in contact with the leg portion Eb of one fastener element E, which is located toward the upper side of the inclination of the first conveying surface 22a, so that the fastener element E can be easily blown off downward and thus the fastener element E can be reliably discharged to the discharging chute 34a.

Also, as shown in Fig. 5, the spraying hole 25a is formed to be inclined upward as it goes along the conveying path 22 toward the downstream side thereof. Therefore, the spraying hole 25a is configured to spray air from the upstream side of the conveying path 22 toward the downstream side thereof.

Further, as shown in Figs. 3 to 5, an upstream-side cover portion 27a and a downstream-side cover portion 27b for covering an upper side of the conveying path 22 are respectively attached to upstream and downstream sides of the color sensor 24 and the air spraying device 25 in the conveying path 22. Also, as shown in Fig. 3, a cutout portion 27c is provided in an upstream and lower corner of the downstream-side cover portion 27b by cutting out a portion thereof. Thus, the fastener element E blown off by the air spraying device 25 can be smoothly dropped onto the discharging chute 34a without coming in contact with the downstream-side cover portion 27b.

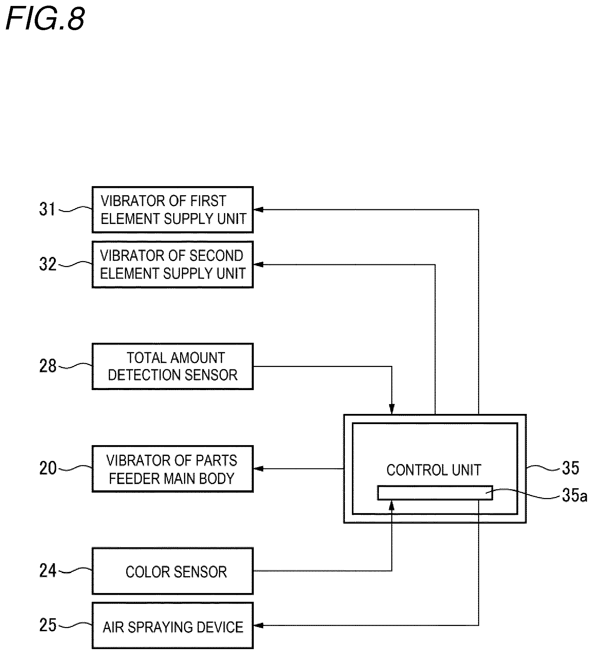

Also, according to the present embodiment, as shown in Fig. 8, each of the vibrator of the first element supply unit 31, the vibrator of the second element supply unit 32, the vibrator of the parts feeder main body 20, the color sensor 24, the air spraying device 25 and a total amount detection sensor 28 is connected to a control unit 35.

The control unit 35 has a storage unit 35a for storing a predetermined color pattern, and the color sensor 24 and the air spraying device 25 are connected to the storage unit 35a. Further, the control unit 35 performs color identification on the basis of information of the predetermined color pattern of the storage unit 35a and information of the color sensor 24, and sprays air from the spraying port 25b of the air spraying device 25 on the basis of results of the color identification and a conveying speed of fastener elements E. Meanwhile, some types of color patterns may be previously stored in the storage unit 35a and also an operator may input information of a color pattern thereto at every manufacturing lot.

The total amount detection sensor 28 is provided at an upstream side of the color sensor 24 in the conveying path 22 and is intended to detect the total amount of fastener elements E supplied to the conveying path 22. Also, on the basis of the total amount detected by the total amount detection sensor 2, fastener elements E are supplied from the first and second element supply units 31 and 32 as necessary.

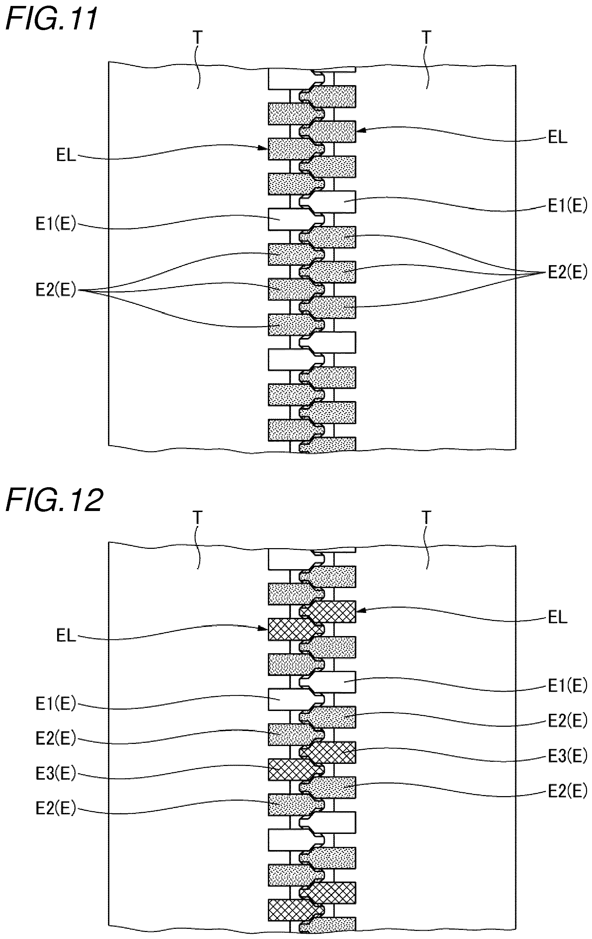

Herein, for example, as shown in Fig. 11, when the color pattern is set so that the first-colored fastener elements E1 are more than the second-colored fastener elements E2, a more amount, a larger number of the second-colored fastener elements E2 relative to the first-colored fastener elements E1 are left on the parts feeder main body 20. In this case, the control unit 35 supplies fastener elements E having a required color from the first and second element supply units 31 and 32 to the parts feeder main body 20 on the basis of information of the color sensor 24 and information of the total amount detection sensor 28. Specifically, on the basis of information of the color sensor 24 and information of the color pattern previously stored in the storage unit 35a, the control unit 35 supplies a larger number of the fastener elements E having a color which is deficient in the conveying path 22, than that of the fastener elements E having a color which is sufficient in the conveying path 22, and also supplies a smaller number of the fastener elements having a color which is sufficient in the conveying path 22, than that of the fastener elements E having a color which is deficient. More specifically, for example, when the first-colored fastener elements E1 are deficient in the conveying path 22, the control unit 35 controls the vibrator of the first element supply unit 31 and the vibrator of the second element supply unit 32 so that a larger number of the first-colored fastener elements E1 is supplied and a smaller number of the second-colored fastener elements E2 is supplied. Meanwhile, supplying of the fastener elements does not necessarily require information of the total amount detection sensor 28, but may be controlled by only information of the color sensor 24.

As shown in Fig. 1, the element attaching machine 12 includes a fastener tape supply device 13 and an element crimping device 14. A downstream end of the supply chute 33 is connected to the element crimping device 14.

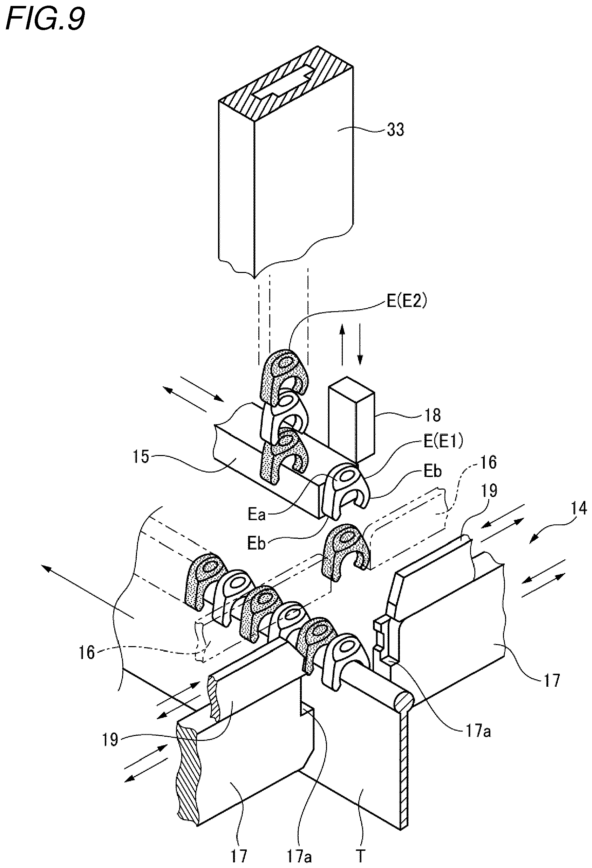

In the element crimping device 14, as shown in Fig. 9, a plurality of fastener elements E (E1, E2) are delivered while being successively arranged in a line in the supply chute 33, and a fastener element E at the lowest position is transferred one by one to a predetermined attaching position on a fastener tape T by a supply rod 15, which is reciprocatingly moved in a transversal direction. At this time, the fastener element E is supplied in a posture in which the engaging head portion Ea is oriented upward and the pair of leg portions Eb are oriented downward. Further, the fastener element E transferred by the supply rod 15 is dropped by its own weight and then, as shown by a two-dot chain line in Fig. 9, is supported between a pair of stoppers 16 and thus temporarily stopped. At this time, also, a pair of attaching punches 17, which is waited at a retracted position while holding the fastener tape T therebetween, is advanced toward the fastener tape T and then temporarily stop while creating a predetermined gap therebetween.

The fastener element E supported by the pair of stoppers 16 is dropped by its own weight while expanding a gap between the pair of stoppers 16, as the engaging head portion Ea is pressed from the upper side thereof by a pressing rod 18, which is reciprocatingly moved in an upward and downward direction. Then, the dropped fastener element E is arranged to straddle a tape side edge portion of the fastener tape T located below.

The pressing rod 18 is continuously further descended to abut against the upper portion of the engaging head portion Ea of the fastener element E, thereby holding the fastener element E so that the fastener element E does not escape upward upon attaching of the fastener element E. At this time, the lower end portions of the leg portions Eb of the fastener elements E are supported by step portions of the attaching punches 17, so that an attaching position of the fastener element E is determined. When a posture of the fastener element E is inclined, a pair of posture control rods 19 is advanced to abut against side surfaces of the engaging head portion Ea of the fastener element E, so that the fastener element E is corrected and held in a normal posture.

Then, the pair of attaching punches 17 is again advanced to laterally press the pair of leg portions Eb of the fastener element E to sandwich the fastener tape T therebetween, thereby attaching the fastener element E to the fastener tape T. If attaching of the fastener element E is ended, the attaching punches 17 and the posture control rods 19 are retracted and also the pressing rod 18 is ascended upward. Then, the fastener tape T is moved by a distance corresponding to a position to which the next fastener element E is to be attached. Meanwhile, it will be understood that the element crimping device 14 is not limited to the above configuration and thus any element crimping devices known conventionally may be appropriately employed.

Next, a first example of a slide fastener SF manufactured by supplying fastener elements E1 and E2, which are arranged in a predetermined pattern in the parts feeder 10 configured as described above, to the element attaching machine 12 will be described with reference to Fig. 10.

As shown in Fig. 10, the slide fastener SF includes a pair of right and left fastener tapes T, a pair of right and left fastener element rows EL provided respectively along opposing tape side edge portions of the pair of right and left fastener tapes T, a slider S for engaging and disengaging the pair of right and left fastener element rows EL with each other, top end stops PI provided respectively on top end portions of the pair of right and left fastener element rows EL and a bottom end stop P2 provided at bottom end portions of the pair of right and left fastener element rows EL.

The fastener element rows EL are constituted of a plurality of fastener elements E and the plurality of fastener elements E are configured in a color pattern in which first-colored fastener elements E1 and second-colored fastener elements E2 are alternately arranged.

Also, as a second example of a slide fastener SF, as shown in Fig. 11, the fastener element rows E1L may have a color pattern in which one first-colored fastener elements E1 and three second-colored fastener elements E2 are alternately arranged.

Further, as a third example of a slide fastener SF, as shown in Fig. 12, third-colored (shown by a halftone pattern) fastener elements E3 may be additionally prepared and thus the fastener element rows EL may have a color pattern in which first-colored fastener elements E1, second-colored fastener elements E2 and third-colored fastener elements E3 are arranged in order of E1, E2, E3 and E2.

Also, when color patterns of first to third-colored fastener elements E1, E2 and E3 constituted of a plurality of color types are not the same number and thus, as shown in Fig. 11, usages of fastener elements having some color types are increased, the numbers of fastener elements having the increased usages on the parts feeder main body 20 are decreased. In this case, preferably, a third element supply unit for supplying the third-colored fastener elements E3 is provided in addition to the first and second element supply units 31 and 32. Due to such configuration, as described above, even if a certain color is deficient, the control unit 35 can supply fastener elements having the required color from the first to third element supply units to the parts feeder main body 20 on the basis of information of the color sensor 24 and information of the total amount detection sensor 28. Meanwhile, the element supply units are preferably provided to be the same number as that of color types of fastener elements used.

Also, a method of manufacturing a slide fastener according to the present embodiment includes the steps of supplying fastener elements E from the first and second element supply units 31 and 32 to the parts feeder 10, conveying the fastener elements E through the conveying path 22 of the parts feeder 10, identifying colors of the fastener elements E by the color sensor 24 provided in the conveying path 22, discharging fastener elements E having colors different from a predetermined color pattern, by the air spraying device 25 on the basis of information of the color sensor 24, conveying fastener elements E, which pass the air spraying device 25, through the conveying path 22, supplying the fastener elements E to the element attaching machine 12 by the supply chute 33 connected to the downstream end of the conveying path 22, and attaching the fastener elements E to the fastener tape T in the element attaching machine 12.

As described above, the parts feeder 10 of the present embodiment includes the color sensor 24 for identifying colors of fastener elements E, and the air spraying device 25 for discharging fastener elements having colors different from a predetermined color pattern, on the basis of information of the color sensor 24. Accordingly, fastener elements E having different colors can be rapidly arranged in the predetermined color pattern and then conveyed to the element attaching machine 12. Also, a mechanism for mechanically arranging fastener elements E in the predetermined color pattern is not required, thereby reducing manufacturing costs of the parts feeder 10.

Further, according to the parts feeder 10 of the present embodiment, the color sensor 24 performs color identification at a position passing through the middle of each of the fastener elements E in the width direction thereof. Accordingly, a color of each fastener element E can be precisely identified.

Further, according to the parts feeder 10 of the present embodiment, the spraying port 25b of the air spraying device 25 is provided at a position where the spraying port comes in contact with leg portions Eb of the fastener elements E. Accordingly, fastener elements E can be easily blown off and thus the fastener elements E can be reliably discharged to the discharging chute 34a.

Further, according to the parts feeder 10 of the present embodiment, the air spraying device 25 is configured to spray air from an upstream side of the conveying path 22 toward a downstream side thereof. Accordingly, it is possible to prevent fastener elements E, which are blown off by the air spraying device 25, from colliding with the color sensor 24.

Further, according to the parts feeder 10 of the present embodiment, the downstream-side cover portion 27b for covering the upper side of the conveying path 22 is attached to a downstream side of the color sensor 24 and the air spraying device 25 in the conveying path 22. Accordingly, it is possible to prevent fastener elements E, which are blown off by the air spraying device 25, from being entrained into a row of fastener elements E on the conveying path 22 after identification.

Further, according to the parts feeder 10 of the present embodiment, in addition to the downstream-side cover 27b, the upstream-side cover portion 27a for covering the upper side of the conveying path 22 is attached to an upstream side of the color sensor 24 and the air spraying device 25 in the conveying path 22. Accordingly, it is possible to prevent fastener elements E, which are blown off by the air spraying device 25, from being entrained into a row of fastener elements E on the conveying path 22 before identification.

Further, according to the parts feeder 10 of the present embodiment, on the basis of information of the color sensor 24 and information of the predetermined color pattern previously set, a larger number of the fastener elements E having a color which is deficient in the conveying path 22, than that of the fastener elements E having a color which is sufficient in the conveying path, is supplied and also a smaller number of the fastener elements having a color which is sufficient in the conveying path 22, than that of the fastener elements E having a color which is deficient in the conveying path, is supplied. Accordingly, proportions of first-colored fastener elements E1 and second-colored fastener elements E2 can become to be close to equal. Thus, the number of times of discharging fastener elements E by the air spraying device 25 can be reduced, thereby improving efficiency of the parts feeder 10.

Further, the method of manufacturing the slide fastener of the present embodiment, the steps of supplying fastener elements E from the first and second element supply units 31 and 32 to the parts feeder 10, conveying the fastener elements E through the conveying path 22 of the parts feeder 10, identifying colors of the fastener elements E by the color sensor 24 provided in the conveying path 22, discharging fastener elements E having color different from a predetermined color pattern, by the air spraying device 25 on the basis of information of the color sensor 24, conveying fastener elements E, which pass the air spraying device 25, through the conveying path 22, supplying the fastener elements E to the element attaching machine 12 by the supply chute 33 connected to the downstream end of the conveying path 22, and attaching the fastener elements E to the fastener tape T in the element attaching machine 12. Accordingly, fastener elements E having different colors can be rapidly arranged in the predetermined color pattern and then conveyed to the element attaching machine 12.

Meanwhile, the present invention is not limited to those that were illustrated in the foregoing embodiments but can be suitably changed without departing from the concept of the invention.

For example, a shape of the fastener elements is not limited to the double-sided elements as in the present embodiment, and accordingly may be so-called single-sided elements, in which an engaging protrusion is formed on one of a first main surface and a second main surface and an engaging recess is formed in the other surface of the first main surface and the second main surface.

Also, types of colors of fastener tapes are not limited to two colors and three colors, but may be four colors, five colors ... n colors. In this case, preferably, n element supply units are likewise provided to correspond to types of colors.

Further, it will be apparent that element supply units corresponding to n colors of fastener elements may be integrated into a single element supply unit. Namely, the first element supply unit and the second element supply unit in the present embodiment may be integrated into a single element supply unit, and in this case fastener elements having two different colors are received in the single element supply unit.

Also, the identification point 24a of the color sensor 24 may be positioned at any other positions. In addition, the identification method may employ color identification means using a CCD camera to picture and identify the entire fastener element, not a point thereon.

### Description of Reference Numerals

- 10: Parts Feeder
- 12: Element Attaching Machine
- 13: Fastener Tape Supply Device
- 14: Element Crimping Device
- 20: Parts Feeder Main Body
- 22: Conveying Path
- 22a: First Conveying Surface
- 22b: Second Conveying Surface
- 23: Part Selection Device
- 24: Color Sensor (Color Identification Means)
- 25: Air Spraying Device (Discharging Means)
- 25a: Spraying Hole
- 25b: Spraying Port
- 27b: Downstream-Side Cover Portion
- 31: First Element Supply Unit (Element Supply Source)
- 32: Second Element Supply Unit (Element Supply Source)
- 33: Supply Chute
- 35: Control Unit
- 35a: Storage Unit
- E: Fastener Element
- E1: First-Colored Fastener Element
- E2: Second-Colored Fastener Element
- Ea: Engaging Head Portion
- Eb: Leg Portion
- Ec: First Main Surface
- Ed: Second Main Surface
- Ee: Outside Surface (Side Surface)

## Claims

1. A parts feeder (10) having an element supply source (31, 32) for receiving fastener elements (E, E1, E) and a conveying path (22) for conveying and arranging the fastener elements supplied from the element supply source in a predetermined direction, the parts feeder comprising:
color identification means (24) provided in the conveying path to identify colors of the fastener elements; and
discharging means (25) provided at a downstream side of the color identification means in the conveying path to discharge fastener elements having colors different from a predetermined color pattern, on the basis of information of the color identification means, wherein:
a plurality of element supply sources (31, 32) are provided,
the fastener elements (E, E1, E2) are respectively received in the plurality of element supply sources by color, and wherein
on the basis of information of the color identification means (24), fastener elements having a required color are supplied from the plurality of element supply sources, and wherein
on the basis of information of the color identification means (24) and information of the predetermined color pattern previously set, a larger number of the fastener elements (E, E1, E2) having a color which is deficient in the conveying path (22), than that of the fastener elements having a color which is sufficient in the conveying path, are supplied and also a smaller number of the fastener elements having the color which is sufficient in the conveying path, than that of the fastener elements having the color which is deficient in the conveying path, are supplied.

2. The parts feeder according to claim 1, further comprising a supply chute (33) connected to a downstream end of the conveying path (22) to supply the fastener elements (E, E1, E2) to an element attaching machine (12).

3. The parts feeder according to claim 1 or 2,
wherein the color identification means is a color sensor (24), and
wherein the color sensor performs color identification at a position passing through a middle of each of the fastener elements (E, E1, E2) in a width direction thereof.

4. The parts feeder according to claim 3,
wherein each of the fastener elements (E, E1, E2) comprises an engaging head portion (Ea) and a pair of leg portions (Eb) extending from the engaging head portion and is arranged on the conveying path (22) so that the engaging head portion is oriented to an upstream side thereof and the pair of leg portions are oriented to a downstream side thereof, and
wherein the color sensor (24) performs the color identification at a position passing through a space between the pair of leg portions from the engaging head portion.

5. The parts feeder according to claim 4,
wherein the discharging means is an air spraying device (25), and
wherein a spraying port (25b) of the air spraying device is provided at a position where the spraying port comes in contact with the leg portions (Eb) of the fastener elements (E, E1, E2).

6. The parts feeder according to claim 5,
wherein each of the fastener elements (E, E1, E2) comprises a first main surface (Ec), a second main surface (Ed) and side surfaces (Ee) connecting the first and second main surfaces with each other,
wherein the conveying path (22) comprises, at least in the vicinity of the spraying port (25b), a first conveying surface (22a) for guiding the first main surface or the second main surface of each of the fastener elements (E, E1, E2) and a second conveying surface (22b) for guiding one of the side surfaces of each of the fastener elements, and
wherein the spraying port is provided at a position on the first conveying surface, through which one leg portion of the pair of leg portions (Eb) opposite to another leg portion adapted to come in contact with the second conveying surface passes.

7. The parts feeder according to claim 5 or 6, wherein the air spraying device (25) is configured to spray air from an upstream side of the conveying path (22) toward a downstream side thereof.

8. The parts feeder according to any one of claims 1 to 7, wherein a cover portion (27b) for covering an upper side of the conveying path is provided at a downstream side of the color identification means (24) and the discharging means (25) in the conveying path (22).

9. The parts feeder according to any one of claims 5 to 8, further comprising a control unit (35) configured to control at least air spraying of the air spraying device (25),
wherein the control unit comprises a storage unit (35a) storing the predetermined color pattern and is configured to perform color identification on the basis of information of the predetermined color pattern of the storage unit and information of the color identification means (24) and then to spray air from the spraying port (25b) of the air spraying device on the basis of results of the color identification and a conveying speed of the fastener elements (E, E1, E2).

10. The parts feeder according to claim 2, wherein the element attaching machine (12) comprises a fastener tape supply device (13) and an element crimping device (14).

11. A method of manufacturing a slide fastener using a parts feeder (10) according to any one of the preceding claims, the method comprising the steps of:
providing a plurality of element supply sources (31, 32);
providing fastener elements (E, E1, E2) respectively received in the plurality of element supply sources by color;
providing a parts feeder (10) having
a conveying path (22) for conveying and arranging the fastener elements supplied from the plurality of element supply sources in a predetermined direction;
color identification means (24) in the conveying path to identify colors of the fastener elements;
discharging means (25) at a downstream side of the color identification means (24) in the conveying path (22);
on the basis of information of the color identification means (24), supplying fastener elements (E, E1, E2) having a required color from the plurality of element supply sources (31, 32) to the parts feeder (10);
conveying the fastener elements through a conveying path (22) of the parts feeder;
identifying colors of the fastener elements by color identification means (24) provided in the conveying path;
discharging, by the discharging means (25), fastener elements having colors different from a predetermined color pattern on the basis of information of the color identification means (24);
conveying the fastener elements which have passed through the discharging means, through the conveying path;
supplying the fastener elements to an element attaching machine (12) by a supply chute (33) connected to a downstream end of the conveying path; and
attaching the fastener elements to a fastener tape by the element attaching machine (12), wherein
on the basis of information of the color identification means (24) and information of the predetermined color pattern previously set, a larger number of the fastener elements (E, E1, E2) having a color which is deficient in the conveying path (22), than that of the fastener elements having a color which is sufficient in the conveying path, are supplied and also a smaller number of the fastener elements having the color which is sufficient in the conveying path, than that of the fastener elements having the color which is deficient in the conveying path, are supplied.

## Patentansprüche

1. Eine Teilezuführeinrichtung (10) mit einer Elementlieferquelle (31, 32) zum Aufnehmen von Befestigungselementen (E, E1, E) und einem Beförderungsweg (22) zum Befördern und Anordnen der Befestigungselemente, die von der Elementlieferquelle geliefert werden, in einer vorbestimmten Richtung, wobei die Teilezuführeinrichtung folgende Merkmale aufweist:
eine Farbidentifizierungseinrichtung (24), die in dem Beförderungsweg bereitgestellt ist, um Farben der Befestigungselemente zu identifizieren; und
eine Abgabeeinrichtung (25), die auf einer in Verarbeitungsrichtung nachgelagerten Seite der Farbidentifizierungseinrichtung in dem Beförderungsweg bereitgestellt ist, um Befestigungselemente mit Farben, die sich von einem vorbestimmten Farbmuster unterscheiden, auf der Basis von Informationen der Farbidentifizierungseinrichtung abzugeben, wobei:
eine Mehrzahl von Elementlieferquellen (31, 32) bereitgestellt ist,
die Befestigungselemente (E, E1, E2) in der Mehrzahl von Elementlieferquellen jeweils nach Farbe aufgenommen sind, und wobei
auf der Basis von Informationen der Farbidentifizierungseinrichtung (24) Befestigungselemente mit einer benötigen Farbe von der Mehrzahl von Elementlieferquellen geliefert werden, und wobei
auf der Basis von Informationen der Farbidentifizierungseinrichtung (24) und Informationen des zuvor festgelegten vorbestimmten Farbmusters eine größere Anzahl von den Befestigungselementen (E, E1, E2) mit einer Farbe, die unzureichend in dem Beförderungsweg (22) vorhanden ist, als von den Befestigungselementen mit einer Farbe, die ausreichend in dem Beförderungsweg vorhanden ist, geliefert werden, und außerdem eine kleinere Anzahl von den Befestigungselementen mit der Farbe, die ausreichend in dem Beförderungsweg vorhanden ist, als von den Befestigungselementen mit der Farbe, die unzureichend in dem Beförderungsweg vorhanden ist, geliefert werden.

2. Die Teilezuführeinrichtung gemäß Anspruch 1, die ferner eine Lieferrutsche (33) aufweist, die mit einem in Verarbeitungsrichtung nachgelagerten Ende des Beförderungsweges (22) verbunden ist, um die Befestigungselemente (E, E1, E2) an eine Elementanbringungsmaschine (12) zu liefern.

3. Die Teilezuführeinrichtung gemäß Anspruch 1 oder 2,
bei der die Farbidentifizierungseinrichtung ein Farbsensor (24) ist, und
bei der der Farbsensor eine Farbidentifizierung an einer Position durchführt, die durch eine Mitte von jedem der Befestigungselemente (E, E1, E2) in einer Breitenrichtung derselben verläuft.

4. Die Teilezuführeinrichtung gemäß Anspruch 3,
bei der jedes der Befestigungselemente (E, E1, E2) einen Ineingriffnahmekopfabschnitt (Ea) und ein Paar von Beinabschnitten (Eb) aufweist, die sich von dem Ineingriffnahmekopfabschnitt erstrecken, und auf dem Beförderungsweg (22) angeordnet ist, so dass der Ineingriffnahmekopfabschnitt zu einer in Verarbeitungsrichtung vorgelagerten Seite desselben ausgerichtet ist und das Paar von Beinabschnitten zu einer in Verarbeitungsrichtung nachgelagerten Seite desselben ausgerichtet ist, und
wobei der Farbsensor (24) die Farbidentifizierung an einer Position durchführt, die durch einen Raum zwischen dem Paar von Beinabschnitten von dem Ineingriffnahmekopfabschnitt aus verläuft.

5. Die Teilezuführeinrichtung gemäß Anspruch 4,
bei der die Abgabeeinrichtung eine Luftsprühvorrichtung (25) ist, und
bei der ein Sprühanschluss (25b) der Luftsprühvorrichtung an einer Position bereitgestellt ist, an der der Sprühanschluss mit den Beinabschnitten (Eb) der Befestigungselemente (E, E1, E2) in Kontakt tritt.

6. Die Teilezuführeinrichtung gemäß Anspruch 5,
bei der jedes der Befestigungselemente (E, E1, E2) eine erste Hauptoberfläche (Ec), eine zweite Hauptoberfläche (Ed) und Seitenoberflächen (Ee) aufweist, die die erste und die zweite Hauptoberfläche miteinander verbinden,
bei der der Beförderungsweg (22) zumindest in der Nähe des Sprühanschlusses (25b) eine erste Beförderungsoberfläche (22a) zum Führen der ersten Hauptoberfläche oder der zweiten Hauptoberfläche jedes der Befestigungselemente (E, E1, E2) und eine zweite Beförderungsoberfläche (22b) zum Führen einer der Seitenoberflächen jedes der Befestigungselemente aufweist, und
bei der der Sprühanschluss an einer Position auf der ersten Beförderungsoberfläche bereitgestellt ist, durch die ein Beinabschnitt des Paares von Beinabschnitten (Eb) verläuft, der dem anderen Beinabschnitt gegenüberliegt, der dazu angepasst ist, mit der zweiten Beförderungsoberfläche in Kontakt zu kommen.

7. Die Teilezuführeinrichtung gemäß Anspruch 5 oder 6, bei der die Luftsprühvorrichtung (25) dazu ausgebildet ist, Luft von einer in Verarbeitungsrichtung vorgelagerten Seite des Beförderungsweges (22) zu einer in Verarbeitungsrichtung nachgelagerten Seite desselben zu sprühen.

8. Die Teilezuführeinrichtung gemäß einem der Ansprüche 1 bis 7, bei der ein Abdeckabschnitt (27b) zum Abdecken einer oberen Seite des Beförderungsweges an einer in Verarbeitungsrichtung nachgelagerten Seite der Farbidentifizierungseinrichtung (24) und der Abgabeeinrichtung (25) in dem Beförderungsweg (22) bereitgestellt ist.

9. Die Teilezuführeinrichtung gemäß einem der Ansprüche 5 bis 8, die ferner eine Steuereinheit (35) aufweist, die dazu ausgebildet ist, zumindest ein Luftsprühen der Luftsprühvorrichtung (25) zu steuern,
wobei die Steuereinheit eine Speichereinheit (35a) aufweist, die das vorbestimmte Farbmuster speichert, und dazu ausgebildet ist, eine Farbidentifizierung auf der Basis von Informationen des vorbestimmten Farbmusters der Speichereinheit und Informationen der Farbidentifizierungseinrichtung (24) durchzuführen und dann Luft aus dem Sprühanschluss (25b) der Luftsprühvorrichtung auf der Basis von Ergebnissen der Farbidentifizierung und einer Beförderungsgeschwindigkeit der Befestigungselemente (E, E1, E2) zu sprühen.

10. Die Teilezuführeinrichtung gemäß Anspruch 2, bei der die Elementanbringungsmaschine (12) eine Befestigungsbandliefervorrichtung (13) und eine Elementquetschvorrichtung (14) aufweist.

11. Ein Verfahren zum Herstellen einer Gleitbefestigungseinrichtung unter Verwendung einer Teilezuführeinrichtung (10) gemäß einem der vorhergehenden Ansprüche, wobei das Verfahren folgende Schritte aufweist:
Bereitstellen einer Mehrzahl von Elementlieferquellen (31, 32);
Bereitstellen von Befestigungselementen (E, E1, E2), die in der Mehrzahl von Elementlieferquellen jeweils nach Farbe aufgenommen sind;
Bereitstellen einer Teilezuführeinrichtung (10), die folgende Merkmale aufweist:
einen Beförderungsweg (22) zum Befördern und Anordnen der Befestigungselemente, die von der Mehrzahl von Elementlieferquellen geliefert werden, in einer vorbestimmten Richtung;
eine Farbidentifizierungseinrichtung (24) in dem Beförderungsweg, um Farben der Befestigungselemente zu identifizieren;
eine Abgabeeinrichtung (25) an einer in Verarbeitungsrichtung nachgelagerten Seite der Farbidentifizierungseinrichtung (24) in dem Beförderungsweg (22);
Liefern, auf der Basis von Informationen der Farbidentifizierungseinrichtung (24), von Befestigungselementen (E, E1, E2) mit einer benötigten Farbe von der Mehrzahl von Elementlieferquellen (31, 32) an die Teilezuführeinrichtung (10);
Befördern der Befestigungselemente durch einen Beförderungsweg (22) der Teilezuführeinrichtung;
Identifizieren von Farben der Befestigungselemente durch eine Farbidentifizierungseinrichtung (24), die in dem Beförderungsweg bereitgestellt ist;
Abgeben, durch die Abgabeeinrichtung (25), von Befestigungselementen mit Farben, die sich von einem vorbestimmten Farbmuster unterscheiden, auf der Basis von Informationen der Farbidentifizierungseinrichtung (24);
Befördern der Befestigungselemente, die durch die Abgabeeinrichtung verlaufen sind, durch den Beförderungsweg;
Liefern der Befestigungselemente an eine Elementanbringungsmaschine (12) durch eine Lieferrutsche (33), die mit einem in Verarbeitungseinrichtung nachgelagerten Ende des Beförderungsweges verbunden ist; und
Anbringen der Befestigungselemente an ein Befestigungsband durch die Elementanbringungsmaschine (12), wobei
auf der Basis von Informationen der Farbidentifizierungseinrichtung (24) und Informationen des zuvor festgelegten vorbestimmten Farbmusters eine größere Anzahl von den Befestigungselementen (E, E1, E2) mit einer Farbe, die unzureichend in dem Beförderungsweg (22) vorhanden ist, als von den Befestigungselementen mit einer Farbe, die ausreichend in dem Beförderungsweg vorhanden ist, geliefert werden, und außerdem eine kleinere Anzahl von den Befestigungselementen mit der Farbe, die ausreichend in dem Beförderungsweg vorhanden ist, als von den Befestigungselementen mit der Farbe, die unzureichend in dem Beförderungsweg vorhanden ist, geliefert werden.

## Revendications

1. Chargeur des pièces (10) ayant une source d'alimentation en éléments (31, 32) pour recevoir des éléments de fixation (E, E1, E) et un trajet d'acheminement (22) pour acheminer et agencer les éléments de fixation alimentés depuis la source d'alimentation en éléments dans une direction prédéterminée, le chargeur de pièces comprenant :
un moyen d'identification de couleurs (24) fourni dans le trajet d'acheminement pour identifier des couleurs des éléments de fixation ; et
un moyen d'évacuation (25) fourni sur un côté aval du moyen d'identification de couleurs dans le trajet d'acheminement pour évacuer les éléments de fixation présentant des couleurs différentes d'un motif coloré prédéterminé, sur la base d'informations du moyen d'identification de couleurs, dans lequel :
une pluralité de sources d'alimentation en éléments (31,32) est fournie,
les éléments de fixation (E, E1, E2) sont respectivement reçus dans la pluralité de sources d'alimentation en éléments par couleur, et dans lequel
sur la base d'informations du moyen d'identification de couleurs (24), des éléments de fixation présentant une couleur requise sont alimentés à partir de la pluralité de sources d'alimentation en éléments, et dans lequel
sur la base d'informations du moyen d'identification de couleurs (24) et d'informations du motif coloré prédéterminé précédemment défini, un grand nombre d'éléments de fixation (E, E1, E2) présentant une couleur qui est insuffisante dans le trajet d'acheminement (22), par rapport à celle des éléments de fixation présentant une couleur qui est suffisante dans le trajet d'acheminement, est fourni et également un plus petit nombre d'éléments de fixation présentant la couleur qui est suffisante dans le trajet d'acheminement, par rapport à celle des éléments de fixation présentant la couleur qui est insuffisante dans le trajet d'acheminement, est fourni.

2. Chargeur de pièces selon la revendication 1, comprenant en outre une goulotte d'alimentation (33) reliée à une extrémité aval du trajet d'acheminement (22) pour alimenter en éléments de fixation (E, E1, E2) une machine adaptée pour fixer des éléments (12).

3. Chargeur de pièces selon la revendication 1 ou 2,
dans lequel le moyen d'identification de couleurs est un capteur de couleur (24), et
dans lequel le capteur de couleur réalise une identification de couleurs à une position en passant par un centre de chacun des éléments de fixation (E, E1, E2) dans une direction de la largeur de ceux-ci.

4. Chargeur de pièces selon la revendication 3,
dans lequel chacun des éléments de fixation (E, E1, E2) comprend une partie de tête de mise en prise (Ea) et une paire de parties de patte (Eb) s'étendant de la partie de tête de mise en prise et est agencé sur le trajet d'acheminement (22) de sorte que la partie de tête de mise en prise est orientée vers un côté amont de celui-ci et que la paire de parties de patte est orientée vers un côté aval de celui-ci, et
dans lequel le capteur de couleur (24) réalise l'identification de couleurs à une position en passant à travers un espace entre la paire de parties de patte à partir de la partie de tête de mise en prise.

5. Chargeur de pièces selon la revendication 4,
dans lequel le moyen d'évacuation est un dispositif de pulvérisation d'air (25), et
dans lequel un orifice de pulvérisation (25b) du dispositif de pulvérisation d'air est fourni à une position où l'orifice de pulvérisation entre en contact avec les parties de patte (Eb) des éléments de fixation (E, E1, E2).

6. Chargeur de pièces selon la revendication 5,
dans lequel chacun des éléments de fixation (E, E1, E2) comprend une première surface principale (Ec), une seconde surface principale (Ed) et des surfaces latérales (Ee) reliant la première et la seconde surface principale l'une avec l'autre,
dans lequel le trajet d'acheminement (22) comprend, au moins à proximité de l'orifice de pulvérisation (25b), une première surface d'acheminement (22a) pour guider la première surface principale ou la seconde surface principale de chacun des éléments de fixation (E, E1, E2) et une seconde surface d'acheminement (22b) pour guider l'une des surfaces latérales de chacun des éléments de fixation, et
dans lequel l'orifice de pulvérisation est fourni à une position sur la première surface d'acheminement, au travers duquel passe une partie de patte de la paire de parties de patte (Eb) à l'opposé de l'autre partie de patte adaptée pour entrer en contact avec la seconde surface d'acheminement.

7. Chargeur de pièces selon la revendication 5 ou 6, dans lequel le dispositif de pulvérisation d'air (25) est configuré pour pulvériser de l'air depuis un côté amont du trajet d'acheminement (22) vers un côté aval de celui-ci.

8. Chargeur de pièces selon l'une quelconque des revendications 1 à 7, dans lequel une partie de couvercle (27b) pour couvrir un côté supérieur du trajet d'acheminement est fournie à un côté aval du moyen d'identification de couleurs (24) et du moyen d'évacuation (25) dans le trajet d'acheminement (22).

9. Chargeur de pièces selon l'une quelconque des revendications 5 à 8, comprenant en outre une unité de commande (35) configurée pour commander au moins une pulvérisation d'air du dispositif de pulvérisation d'air (25),
dans lequel l'unité de commande comprend une unité de stockage (35a) stockant le motif coloré prédéterminé et est configurée pour réaliser une identification de couleurs sur la base d'informations du motif coloré prédéterminé de l'unité de stockage et d'informations du moyen d'identification de couleurs (24) et ensuite pour pulvériser de l'air depuis l'orifice de pulvérisation (25b) du dispositif de pulvérisation d'air sur la base des résultats de l'identification de couleurs et de la vitesse d'acheminement des éléments de fixation (E, E1, E2).

10. Chargeur de pièces selon la revendication 2, dans lequel la machine adaptée pour fixer des éléments (12) comprend un dispositif d'alimentation de bandes de fixation (13) et un dispositif de sertissage d'éléments (14).

11. Procédé de fabrication d'un élément de fixation coulissant utilisant un chargeur de pièces (10) selon l'une quelconque des revendications précédentes, le procédé comprenant les étapes suivantes :
la fourniture d'une pluralité de sources d'alimentation en éléments (31, 32);
la fourniture d'éléments de fixation (E, E1, E2) respectivement reçus dans la pluralité de sources d'alimentation en éléments par couleur ;
la fourniture d'un chargeur de pièce (10) présentant
- un trajet d'acheminement (22) pour acheminer et agencer les éléments de fixation alimentés depuis la pluralité de sources d'alimentation en éléments dans une direction prédéterminée ;
- un moyen d'identification de couleurs (24) dans le trajet d'acheminement pour identifier les couleurs des éléments de fixation ;
- un moyen d'évacuation (25) sur un côté aval du moyen d'identification de couleurs (24) dans le trajet d'acheminement (22) ;
sur la base d'informations du moyen d'identification de couleurs (24), l'alimentation en éléments de fixation (E, E1, E2) présentant une couleur requise de la pluralité de sources d'alimentation en éléments (31, 32) au chargeur de pièce (10) ;
l'acheminement des éléments de fixation par un trajet d'acheminement (22) du chargeur de pièces ;
l'identification des couleurs des éléments de fixation par un moyen d'identification de couleurs (24) fourni dans le trajet d'acheminement ;
l'évacuation, par le moyen d'évacuation (25), des éléments de fixation présentant des couleurs différentes d'un motif coloré prédéterminé sur la base d'informations du moyen d'identification de couleurs (24) ;
l'acheminement des éléments de fixation qui sont passés par le moyen d'évacuation, par le trajet d'acheminement ;
l'alimentation en éléments de fixation d'une machine adaptée pour fixer des éléments (12) par une goulotte d'alimentation (33) reliée à une extrémité aval du trajet d'acheminement ; et
la fixation des éléments de fixation sur une bande de fixation par la machine adaptée pour fixer des éléments (12), dans lequel
sur la base d'informations du moyen d'identification de couleurs (24) et d'informations du motif coloré prédéterminé précédemment défini, un grand nombre d'éléments de fixation (E, E1, E2) présentant une couleur qui est insuffisante dans le trajet d'acheminement (22), par rapport à celle des éléments de fixation présentant une couleur qui est suffisante dans le trajet d'acheminement, est fourni et également un plus petit nombre d'éléments de fixation présentant la couleur qui est suffisante dans le trajet d'acheminement, par rapport à celle des éléments de fixation présentant la couleur qui est insuffisante dans le trajet d'acheminement, est fourni.
